# EUROPÄISCHE PATENTSCHRIFT

(11) **EP 2 542 776 B1**
(45) Veröffentlichungstag und Bekanntmachung des Hinweises auf die Patenterteilung: **18.05.2016**
(21) Anmeldenummer: 10722681.3
(22) Anmeldetag: 27.05.2010
(51) Int. Cl.: F03B 13/14, F03B 17/02, F03B 13/18

(54) **WELLENENERGIEKRAFTWERK NACH DEM PRINZIP DER OSZILLIERENDEN WASSERSÄULE**
WAVE POWER PLANT ACCORDING TO THE PRINCIPLE OF THE OSCILLATING WATER COLUMN
CENTRALE HOULOMOTRICE FONCTIONNANT SELON LE PRINCIPE DE LA COLONNE D'EAU OSCILLANTE

(30) Priorität: 05.06.2009 DE 102009024276
(43) Veröffentlichungstag der Anmeldung: 09.01.2013
(73) Patentinhaber: RenCon GmbH, 41564 Kaarst (DE)
(72) Erfinder: FOLCHERT, Jörg, 53177 Bonn (DE); GÖLZ, Axel, 50823 Köln (DE)
(74) Vertreter: Lippert, Stachow & Partner
(86) Internationale Anmeldenummer: PCT/EP2010/057299
(87) Internationale Veröffentlichungsnummer: WO 2010/139593

(56) Entgegenhaltungen:
- WO-A1-2007/125538
- FR-A1- 2 917 138
- GB-A- 2 145 164
- GB-A- 2 431 437
- US-A1- 2006 233 613

## Beschreibung

Die Erfindung betrifft ein Wellenenergiekraftwerk mit einer Kammer zur Zwangsführung einer oszillierenden Wassersäule, wobei die unterhalb der Wasseroberfläche an sich geschlossene Kammer eine Öffnung aufweist, durch welche Wasser in die Kammer ein- und nachfolgend wieder ausfließt, und wobei ein Mittel vorgesehen ist zur Entnahme von mechanischer Energie aus der oszillierenden Wassersäule und zur Umwandlung der mechanischen Energie in elektrische Energie.

Bestrebungen zur Nutzung von regenerativen Energiequellen sind in den letzten Jahren immer mehr verstärkt worden. Hierzu gehört auch die Nutzung der Wellenenergie der Ozeane, welche auf dem offenen Meer, jedoch auch an den Küsten fortwährend zur Verfügung steht. Beispielsweise offenbart GB 2 431 437 A ein Wellenenergiekraftwerk, bei dem ein Lineargenerator zum Umwandeln der Auf- und Abbewegung von Wellen in elektrische Energie eingesetzt wird. Die am häufigsten zur Nutzung der Wellenenergie vorgeschlagene Vorrichtung ist ein Wellenenergiekraftwerk, wie es beispielsweise in der DE 43 31 988 C2 beschrieben ist. Dabei ist eine Kammer beispielsweise im Küstenbereich auf dem Meeresgrund stehend vorgesehen, wobei Meerwasser nach dem Prinzip der kommunizierenden Röhren aufgrund der Wellenbewegung des Meeres über die unterhalb der Wasseroberfläche angeordnete Öffnung in die Kammer ein- und ausfließt, sodass sich in der Kammer selbst eine oszillierende, zwangsgeführte Wassersäule einstellt. Zur

Umwandlung dieser Wellenenergie in einem solchen gattungsgemäßen OWC (oscillating water column)- Wellenkraftwerk ist herkömmlicherweise eine weitere Öffnung im oberen Bereich der Kammer, in dem sich Luft befindet, vorgesehen. Im Bereich dieser Öffnung der Kammer wird eine Turbine angeordnet, welche einen Generator zur Erzeugung von elektrischer Energie antreibt.

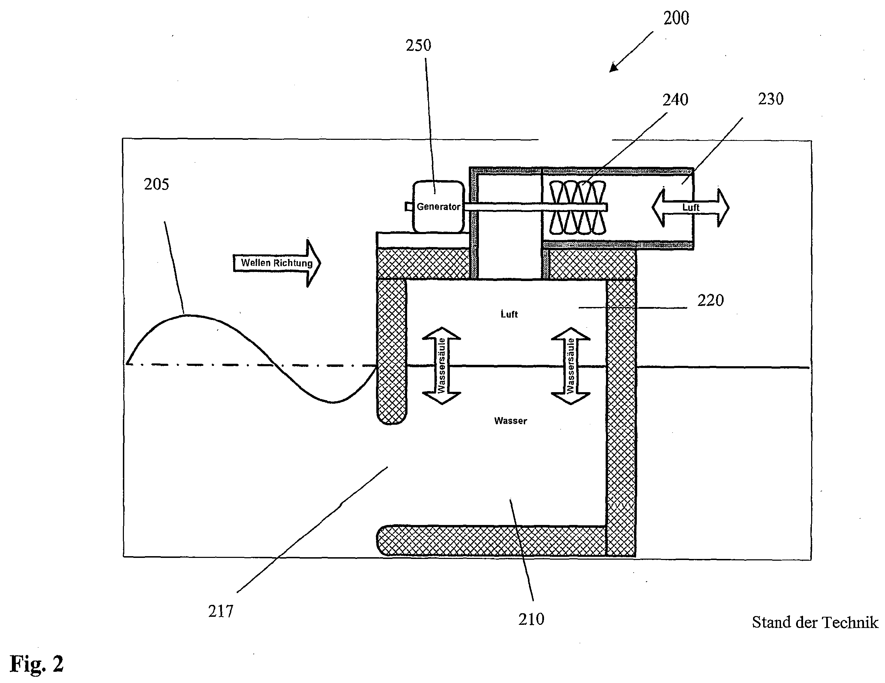

Figur 2 zeigt ein solches herkömmlich aufgebautes Wellenenergiekraftwerk, bei dem durch die einlaufende Welle 205 in der Kammer 210 eine oszillierende Wassersäule erzeugt wird. Dabei wird die Luft in der Kompressionskammer 220, welche sich nach oben verjüngen kann, komprimiert und aus der Öffnung 230 ausgestoßen, wenn sich die Wassersäule nach oben bewegt. Bewegt sich die Wassersäule aufgrund der Wellensituation vor der Kammer nach unten, sodass Wasser aus der Öffnung 217 austritt, wird über die Öffnung 230 Luft angesaugt. Die so bewegte Luft treibt eine Wellsturbine 240 an, die sich dadurch auszeichnet, dass unabhängig von der Strömungsrichtung der Luft die Turbine nur in eine vorgegebene Richtung dreht. Über eine Welle treibt die Turbine 240 einen Generator 250 zur Erzeugung von elektrischer Energie an. Der Generator kann dabei innerhalb des Luftstroms an der Welle angebaut sein oder auch außerhalb wie hier gezeigt.

Diese bei dem gattungsgemäßen OWC-Wellenkraftwerk häufig eingesetzte Wellsturbine weist jedoch einen vergleichsweise geringen Wirkungsgrad von etwa 10% - 70% auf. Der theoretische maximale Wirkungsgrad liegt bei 71%. Aufgrund hydrodynamischer und pneumatischer Randeffekte, die zumindest teilweise auch auf die Kompressibilität der Luft beruhen, beträgt der Gesamtwirkungsgrad in der Praxis eines solchen herkömmlichen OWC-Wellenenergiekraftwerks nur maximal 17% in Bezug auf die in den einlaufenden Wellen gespeicherten Energie. Darüber hinaus ist es bei diesem herkömmlichen Wellenenergiekraftwerk vergleichsweise schwierig die Kopplung des anregenden Systems, d.h. der Wellen im offenen Meer, an das Schwingungssystem, umfassend den Einlass der Kammer, die Wassersäule, die Luftmasse, die Turbine und den Auslass der Kammer, zu optimieren und an sich ändernde äußere Rahmenbedingungen anzupassen. Um den Energieeintrag aus dem Meer in das Schwingungssystem zu optimieren, sollte dessen Eigenfrequenz mit der Frequenz der ankommenden Wellen übereinstimmen, sodass je nach äußeren Bedingungen das Schwingungssystem angepasst werden muss. Hierzu ist in der DE 43 31 988 C2 das Vorsehen einer weiteren Kammer gelehrt, deren Volumen veränderbar ist. Im Stand der Technik auch bekannt ist die Abbremsung der Turbine über eine mechanische Bremse, um die Eigenfrequenz des Systems an die Erregerfrequenz anzupassen. All diese Maßnahmen sind jedoch sehr aufwendig bzw. gehen mit einer Energievernichtung einher, was dem eigentlichen Zweck der Vorrichtung entgegen gerichtet ist. Ein weiterer mit der Verwendung herkömmlicher OWC-Wellenenergiekraftwerke verbundener Nachteil begründet sich in der Verwendung der Turbine. Der direkte und indirekte Kontakt mit Salzwasser erfordert die Verwendung korrosionsbeständiger Materialien, was die Kosten für ein solches Kraftwerk stark erhöht. Aufgrund der Ein- und Auslassöffnungen der Turbine können ferner mechanische Beschädigungen durch im Meer treibende Gegenstände, insbesondere wenn die Turbine durch einen hohen Wellengang überflutet wird, auftreten, sodass letztlich auch der Wartungsaufwand hoch ist. Ein weiterer Nachteil besteht in dem Wasser-/Luftgemisch, dass durch die Wasserpartikel zu einem Abbremsen der Turbinenschaufeln beim Aufschlagen führt. Darüber hinaus muss die Turbine zunächst durch einen externen Antrieb auf eine vorgegebene Mindestdrehzahl von etwa 500 U/min. gebracht werden, bevor überhaupt Energie erzeugt werden kann. Die übliche Arbeitsdrehzahl einer solchen Turbine beträgt etwa 1.500 U/min., was einerseits eine hohe mechanische Belastung für eine Vielzahl von Bauteilen des Kraftwerks und darüber hinaus jedoch auch eine akustische Belastung der Umwelt bedeutet, sodass sich ein solches Kraftwerk insbesondere in Küstennähe eher verbietet.

Der Erfindung liegt die Aufgabe zugrunde, die oben genannten Nachteile der herkömmlichen Wellenenergiekraftwerke zumindest teilweise zu beheben.

Die Erfindung löst die obige Aufgabe dadurch, dass das Mittel zur Entnahme von mechanischer Energie aus der oszillierenden Wassersäule und zur Umwandlung der mechanischen Energie in elektrische Energie eine von der Wassersäule getragene Schwimmkörpereinrichtung sowie einen Lineargenerator mit einem Stator und einem Aktuator umfasst, wobei die Schwimmkörpereinrichtung in mechanischer Wirkverbindung mit dem Aktuator des Lineargenerators steht und der Aktuator zur Erzeugung von elektrischer Energie durch die Bewegung der Schwimmkörpereinrichtung relativ zu dem Stator des Lineargenerators hin- und her bewegbar ist, wobei zwischen der Schwimmkörpereinrichtung und dem Aktuator ein Stempel angeordnet ist welcher an einem Längsende mit einer Trägereinrichtung zum Tragen des Aktuators verbunden ist, wobei eine Steuereinrichtung vorgesehen ist zum Anpassen der Eigenfrequenz des Kammerschwingungssystems an die Frequenz der an die Kammer anlaufenden Wellen mittels Ansteuern des Lineargenerators zur Entnahme von Energie, und/oder mittels Trimmen der Schwimmkörpereinrichtung durch Ansteuern zumindest einer Ventileinrichtung, wobei ein Schwimmkörper als Hohlkörper ausgebildet ist und auf einer der Wassersäule zugewandten Seite zumindest eine Öffnung aufweist und die Ventileinrichtung vorgesehen ist zum Auslassen und/oder Einlassen von Luft in den Hohlkörper, und/oder mittels Einstellen eines Betriebsparameters einer mit dem Stempel in mechanischer Wirkverbindung stehenden Federeinrichtung, insbesondere einer Federkonstanten der Federeinrichtung.

Das erfindungsgemäße Wellenenergiekraftwerk weist den Vorteil auf, dass die lineare Bewegung der Wassersäule direkt in elektrische Energie umgewandelt wird, ohne dass eine Übertragung der Wassersäulenbewegung auf eine Luftmasse notwendig ist. Die Verwendung einer Turbine kann entfallen, sodass auch die mit der Turbine verbundenen Nachteile entfallen. Die von der Schwimmkörpereinrichtung aufgenommene Linearbewegung der Wassersäule kann direkt auf den für diese Linearbewegung optimierten Generator, d.h. auf den Lineargenerator übertragen werden. Der Wirkungsgrad eines solchen erfindungsgemäßen Wellenenergiekraftwerks ist optimiert und kann nach Simulationen und bisher erfolgten Versuchsreihen bis zu **74** % betragen. Darüber hinaus ergeben sich durch die Vereinfachung des Kraftwerkprinzips erhöhte Betriebszeiten und geringere Wartungskosten. Darüber resultiert aus der Kombination des linear bewegten Schwimmkörpers mit dem Lineargenerator eine im Vergleich zu der herkömmlichen Turbinenlösung sehr viel bessere Regelmöglichkeit des Kraftwerks.

Das Prinzip des Lineargenerators ist wohl bekannt, es beruht auf der Erzeugung eines sich ändernden magnetischen Flusses in einer Spule durch eine Relativbewegung-des Aktuators und des Stators. Vorliegend wird der Begriff Stator für den Teil des Lineargenerators verwendet, welcher unbeweglich zur Kammer angeordnet ist, entsprechend ist der Aktuator der Teil des Lineargenerators, welcher bewegt wird. Die magnetische Erregung kann dabei entweder durch den Aktuator oder durch den Stator bereitgestellt werden, in jedem Fall entsteht ein sich ändernder Feldfluss durch die Relativbewegung von Aktuator und Stator.

Bei dem erfindungsgemäßen Wellenenergiekraftwerk lässt sich die Anpassung der Eigenfrequenz des durch den Einlass, die Wassersäule, die Schwimmkörpereinrichtung, den Stempel und den Lineargenerator gebildeten Kammerschwingungssystems auf einfache Weise an die Frequenz der an die Kammer anlaufenden Wellen zur Optimierung des Energieübertrags mittels einer Steuereinrichtung dadurch realisieren, dass beispielsweise über eine Änderung der Dämpfung die Eigenfrequenz des Systems verändert wird. Die Dämpfung kann bei dem erfindungsgemäßen Wellenenergiekraftwerk vorteilhaft dadurch verändert werden, dass bei dem Lineargenerator aufgrund dessen genauer Regelmöglichkeiten sehr genau die Energieentnahme verändert wird, wodurch die Eigenfrequenz des Systems exakt angepasst werden kann. Damit kann beispielsweise die vom Stand der Technik her bekannte umständliche zusätzliche Kammer mit veränderbarem Volumen eingespart werden, wobei das erfindungsgemäße Wellenenergiekraftwerk andererseits auch in Verbindung mit einer weiteren Kammer bzw. eines sogenannten Vorhafens zur besseren Energiekopplung genutzt werden kann.

Darüber hinaus kann es auch vorteilhaft sein, wenn eine Steuereinrichtung vorgesehen ist, welche durch Trimmen der Schwimmkörpereinrichtung mittels Ansteuerns zumindest einer Ventileinrichtung an einem Schwimmkörper die Anpassung der Eigenfrequenz des Kammerschwingungssystems an die Frequenz der an die Kammer anlaufenden Wellen durchführt. Dabei ist der Schwimmkörper als Hohlkörper ausgebildet und weist auf einer der Wassersäule zugewandten Seite zumindest eine Öffnung auf, wobei die ansteuerbare Ventileinrichtung vorgesehen ist zum Auslassen und/oder Einlassen von Luft in den Hohlkörper. Insofern wirkt die Öffnung als Flutöffnung, in welcher durch Ansteuern der Ventileinrichtung Wasser in den Schwimmkörper eindringen kann, sodass eine Wassertrimmung des Schwimmkörpers bereitgestellt werden kann. Zweckmäßigerweise weist die Schwimmkörpereinrichtung eine Mehrzahl derartiger trimmbarer Schwimmkörper auf, um den Auftrieb der gesamten Schwimmkörpereinrichtung einzustellen und damit beispielsweise das Kraftwerk an den vorherrschenden Wellengang zur Optimierung des Wirkungsgrades des Kraftwerkes anzupassen, um eine kostengünstige Leistungslimitierung einzustellen und/oder um eine komplette Flutung der Schwimmkörper zur Erzielung einer Sturmsicherheit für das Kraftwerk bereitzustellen. Ggf. kann der Schwimmkörper durch Fluten auch so austariert werden, dass bei einer Abwärtsbewegung durch die Gewichtskraft wesentlich mehr Energie als durch die Gewichtskraft des leeren Schwimmers erzeugt werden kann.

Ferner kann es auch vorteilhaft sein, wenn eine Steuereinrichtung vorgesehen ist, welche durch Einstellen eines Betriebsparameters einer mit dem Stempel in mechanischer Wirkverbindung stehender Federeinrichtung die Anpassung der Eigenfrequenz des Kammerschwingungssystems an die Frequenz der an die Kammer anlaufenden Wellen durchführt. Beispielsweise kann durch entsprechendes Ansteuern eines Ventils der obenbeschriebenen Gasdruckfeder deren Federkonstante verändert werden.

Bekannt aus der Literatur ist bereits die änderung der Resonanzfrequenz durch Änderung des Einlaufvolumens im Vorhafen bekannt.
Auch könnte ein Anheben der Bodenplatte das Volumen in der Kammer ändern und so ebenfalls das Resonanzverhalten anpassen.

Erfindungsgemäß ist zur Herstellung einer mechanische Wirkverbindung, die insbesondere formschlüssig oder kraftschlüssig sein kann, zwischen der Schwimmkörpereinrichtung und dem Aktuator ein Stempel angeordnet, welcher die Bewegung der Schwimmkörpereinrichtung auf den Aktuator des Generators überträgt, wobei der Stempel an einem Längsende mit einer Trägereinrichtung zum Tragen des Aktuators verbunden ist. Die Verwendung dieser Stempeleinrichtung hat den Vorteil, dass aufgrund der Längserstreckung des Stempels ein vorgegebener Abstand zwischen der Schwimmkörpereinrichtung und damit dem Meerwasser und Teilen des Lineargenerators eingerichtet werden kann, um insbesondere Korrosionseinflüsse des Meerwassers auf den elektrischen Generator zu vermeiden bzw. zumindest zu erniedrigen.

Vorteilhafte Ausführungsformen der Erfindung sind in den Unteransprüchen angegeben.

Das erfindungsgemäße Wellenenergiekraftwerk kann sowohl mit am Grund befestigter Kammer als auch schwimmend im Meer angeordnet sein, soweit die Meerestiefe und die Gestaltung der Kammer zum Einstellen des benötigten Auftriebes ausgebildet sind. Des Weiteren kann die Kammer auch an im Meer bereits bestehenden natürlichen oder von Menschenhand geschaffenen Strukturen, z.B. ohne aber darauf einzuschränken Türme von Windkraftanlagen, Felsen, Bohrplattformen oder Gebäuden angebracht werden. Grundsätzlich kann der Lineargenerator beispielsweise kartesisch oder auch zylindrisch aufgebaut sein, eine zylindrische Bauart eignet sich insbesondere zum Einbau in Pfahlbauten an Plattformen/Wettermessstationen oder auch in Pfahlfundamenten von Windkraft-Offshore-Anlagen.

Vorteilhafterweise kann der Stempel zur Aufnahme von Transversalkräften sowohl an der Schwimmkörpereinrichtung als auch an der Aktuator-Trägereinrichtung jeweils mittels einer Gelenkanordnung angelenkt sein, sodass die eventuell auftretende Querkräfte nicht von Führungen des Lineargenerators aufgenommen werden müssen. Der Stempel selbst kann je nach Ausführungsform starr ausgebildet sein, sodass Kräfte in axialer Richtung auf die Schwimmkörpereinrichtung ohne Verluste von dem Stempel auf die Aktuator-Trägereinrichtung übertragen werden. Ein geeignetes Stempelmaterial ist z.B. Stahl.

Andererseits kann vorteilhaft zwischen der Schwimmkörpereinrichtung und dem Aktuator, beispielsweise am Stempel, an dessen Anlenkung und/oder an der Aktuator-Trägereinrichtung eine elastische Puffereinrichtung vorgesehen sein, um plötzliche Schockwelle mechanisch abzufangen und so Beschädigungen am Lineargenerator oder den Führungseinrichtungen zu vermeiden. Diese elastische Puffereinrichtung kann vorteilhaft auch Dämpfungseigenschaften aufweisen.

Um eine möglichst lineare Bewegung der Schwimmkörpereinrichtung in der Kammer sicherzustellen, kann ein Mittel zur linearen Führung der Schwimmkörpereinrichtung an der Kammerinnenwand vorgesehen sein. Beispielsweise kann sich die Schwimmkörpereinrichtung mit umfänglich angebrachten Rolleneinrichtungen an der Kammerinnenwand oder daran angebrachten Abrollflächen abstützen, wobei die Rolleneinrichtungen bei der Auf- und Abbewegung der Schwimmkörpereinrichtung an der Kammerinnenwand bzw. der an der Kammerinnenwand angebrachten Abrollfläche abrollen. Darüber hinaus können auch Gleitvorrichtungen an der Schwimmkörpereinrichtung vorgesehen sein, die an komplementären Vorrichtungen an der Kammerinnenwand zur Führung der Schwimmkörpereinrichtung entlang gleiten. Vorzugsweise kommen hier harte Flächen (z.B. Stahl oder Edelstahl) auf Kunststofflagern oder umgekehrt zum Einsatz. Zweckmäßigerweise ist das Mittel zur linearen Führung der Schwimmkörpereinrichtung in der Kammer so ausgebildet, dass keine Abdichtung zwischen der Kammerinnenwandung und der Schwimmkörpereinrichtung vorliegt, was den Aufbau des erfindungsgemäßen Kraftwerks vereinfacht.

Die übliche Grundfläche einer Kammer eines erfindungsgemäßen Wellenenergiekraftwerks kann je nach Ausführungsform wenige Quadratmeter bis zu einigen Hundert Quadratmeter betragen. In der Regel erstreckt sich die Schwimmkörpereinrichtung über die gesamte Grundfläche der Kammer. Um die Installation und die Wartung der Schwimmkörpereinrichtung zu vereinfachen, kann es zweckmäßig sein, eine Mehrzahl von Schwimmkörpern vorzusehen, welche an einer gemeinsamen Trägereinrichtung befestigt sind, an die dann insbesondere der Stempel zur Übertragung der linearen Bewegung der Schwimmkörpereinrichtung auf den Aktuator des Generators befestigt wird. Diese Schwimmkörper können je nach Ausführungsform als Hohlkörper, jedoch auch als Vollkörper ausgebildet sein. Als geeignete Materialien sind beispielsweise Kunststoff, GFK, Stahl oder andere seewasserfeste Materialien verwendbar.

Besonders zweckmäßig ist es dabei, wenn die Schwimmkörper nach Lösen der Befestigung an der gemeinsamen Trägereinrichtung nach unten, d.h. zur Wasserseite abnehmbar sind, sodass ein Wechsel eines defekten Schwimmkörpers ohne Demontage größerer Teile des Kraftwerks durchgeführt werden kann.

Die Kammer zur Aufnahme der oszillierenden Wassersäule kann aus den verschiedensten Materialien wie Beton, Stahl, Kunststoff etc., jedoch auch aus Verbundmaterialien bestehen. Zweckmäßigerweise ist der Lineargenerator mit den beiden wesentlichen Bestandteilen Aktuator und Stator außerhalb der Kammer angeordnet, wobei sich der Stempel durch eine zur Wasserlinie obere Wandung der Kammer hindurch beweglich erstreckt. Durch diese Gestaltung des erfindungsgemäßen Kraftwerks kann der in Bezug auf Korrosion empfindliche Lineargenerator strikt vom Meerwasser getrennt angeordnet werden, was die Lebensdauer des erfindungsgemäßen Wellenenergiekraftwerks erhöht bzw. den Wartungsaufwand wesentlich erniedrigt. Letztlich kann der Lineargenerator in einem abgedichteten Raum platziert werden, wobei eine entsprechende Dichtungsanordnung vorgesehen sein kann, so dass kein Wasser in diesen den Lineargenerator aufnehmenden Raum eindringen kann.

Durch die lineare Bewegung der Wassersäule bzw. der Schwimmkörpereinrichtung in der Kammer wird dem Generator Energie im Wesentlichen in dem Zeitintervall zugeführt, bei welchem die Wassersäule steigt. Bei fallender Wassersäule wirkt die Gewichtskraft auf das System Aktuator/Aktuator-Trägereinrichtung/Stempel/Schwimmkörpereinrichtung, sodass in diesem Zeitintervall die potentielle Energie der genannten Bauteile des Kraftwerks zur Verfügung steht, wobei diese Energie auch zum Abwärtsbewegen des Systems mit der Wassersäule genutzt wird. Um eine gleichmäßigere Energiebereitstellung des Systems zu realisieren, kann eine als Gasdruckfeder arbeitender Gasdruckraum vorgesehen sein, wobei ein Abschnitt der den Gasdruckraum festlegenden Wandung durch eine Stirnfläche der Aktuator-Trägereinrichtung bereitgestellt ist, sodass das Volumen des Gasdruckraums durch die Bewegung des Stempels zur Speicherung und Abgabe von Energie veränderbar ist.

Zweckmäßigerweise ist dabei die Stirnfläche der Aktuator-Trägereinrichtung abgedichtet zum Rest der Wandung des Gasdruckraumes, sodass das komprimierte Gas wie beispielsweise Luft nicht entweichen und somit Energie ohne Druckverlust in der Gasdruckfeder gespeichert werden kann. Durch diese gestalterische Maßnahme kann erreicht werden, dass gezielt während der Oszillation der Wassersäule Energie in der Gasdruckfeder gespeichert und gezielt abgegeben werden kann. In den meisten Fällen wird der Gasdruckraum so ausgebildet sein, dass Energie während der Aufwärtsbewegung der Wassersäule gespeichert wird und bei der Abwärtsbewegung der Schwimmkörpereinrichtung zur Verfügung steht. Andererseits ist es in einer speziellen Ausführungsform durch entsprechende Gestaltung auch der umgekehrte Fall möglich, d.h. Energie wird bei der Abwärtsbewegung der Schwimmkörpereinrichtung gespeichert, die dann zusätzlich bei der nachfolgenden Aufwärtsbewegung der Wassersäule bzw. der Schwimmkörpereinrichtung zur Verfügung steht. Darüber hinaus kann vorteilhafterweise an dem Gasdruckraum ein ansteuerbares Ventil vorgesehen sein, um z.B. einerseits die in der Gasdruckfeder zu speichernde Energie festzulegen und/oder andererseits die Gasdruckfeder insbesondere in bestimmten Betriebssituationen aus Sicherheitserwägungen abzustellen.

Bei einer ähnlichen Ausführungsform kann der Gasdruckraum durch eine mechanische, aus ihrer Ruhelage auslenkbare Federeinrichtung wie eine Spiralfeder- oder Gummibandanordnung ersetzt sein. Auch bei dieser Ausführungsform steht die Federeinrichtung mit dem Stempel in mechanischer Wirkverbindung, wobei die Auslenkung der Federeinrichtung durch die Bewegung des Stempels zur Speicherung und Abgabe von Energie veränderbar ist. Dabei ist das oben genannte Beispiel nicht einschränkend zu sehen für die dem versierten Fachmann zur Verfügung stehenden Ausführungsformen. Ferner ist es natürlich möglich, sowohl einen Gasdruckraum als auch eine mechanische Federeinrichtung vorzusehen zur Speicherung und Abgabe von Energie durch die Bewegung des Stempels.

Ggf. kann der Schwimmkörper durch Fluten auch so austariert werden, dass bei einer Abwärtsbewegung durch die Gewichtskraft wesentlich mehr Energie erzeugt werden kann.

Bei einer besonders vorteilhaften Betriebsweise des erfindungsgemäßen Wellenenergiekraftwerk kann kurz vor und/oder während der Aufwärtsbewegung der Schwimmkörpereinrichtung durch Ansteuerung eines oder mehrerer Flutventile Wasser in Schwimmkörper der Schwimmkörpereinrichtung eingelassen werden, so dass die Schwimmkörpereinrichtung ein höheres Gewicht bekommt und während der Aufwärtsbewegung eine größere potentielle Energie gespeichert wird, welche auf dem Abwärtsweg wieder abgeben werden kann. Hierdurch wird zusätzliche potentielle Energie gespeichert, die der Wassersäule entnommen wird. Kurz vor dem unteren Umkehrpunkt der Schwimmkörpereinrichtung kann das Wasser wieder ausgelassen werden, um das Gewicht der Schwimmkörpereinrichtung wieder zu verringern und so den Auftrieb zu vergrößern. Danach beginnt der Zyklus von Neuem, der wie beschrieben mit dem Bewegungszyklus der Schwimmkörpereinrichtung korreliert ist.

Ein besonders einfacher Aufbau des erfindungsgemäßen Wellenenergiekraftwerks ergibt sich, wenn der Lineargenerator zylindrisch ausgebildet ist und die Aktuator-Trägereinrichtung ein Gleitrohr umfasst, das an seiner Mantelfläche den Aktuator trägt und innerhalb einer zum Aktuator feststehenden Hohlzylinders bewegbar ist. Zweckmäßigerweise gleitet das Gleitrohr am Hohlzylinder, sodass die Aktuator-Trägereinrichtung bzw. der Aktuator linear geführt ist. Besonders zweckmäßig kann das Gleitrohr zum Hohlzylinder zu diesem abdichtend bewegbar angeordnet sein, um insbesondere den oben erwähnten Gasdruckraum zur gezielten Speicherung und Abgabe von Energie bereitzustellen.

Bei der vorgenannten Ausführungsform kann es zweckmäßig sein, wenn eine stabförmige Halteeinrichtung feststehend im Hohlzylinder angeordnet ist, der einen Stababschnitt und einen den Stator tragenden Trägerabschnitt aufweist, wobei sich die Halteeinrichtung im Wesentlichen parallel zur Hohlzylinderachse erstreckt. Durch diese gestalterische Maßnahme wird der Stator feststehend zu dem sich bewegenden Aktuator am Gleitrohr angeordnet. Eine derartige Gestaltung weist den Vorteil auf, dass am Stababschnitt Versorgungsleitungen zum Stator geführt werden können. Dies kann insbesondere vorteilhaft sein, wenn am Stator eine Erregereinrichtung in Form von supraleitenden Magneten angeordnet ist. In diesem Fall kann die Stator-Trägereinrichtung z.B. auch als Kryostat ausgebildet sein, wobei zumindest einige der Versorgungsleitungen des Kryostaten bzw. der darin enthaltenen supraleitenden Spulen über den Stababschnitt geführt sind.

Um bei der Ausführungsform, bei welcher die Aktuator-Trägereinrichtung als Gleitrohr ausgebildet ist, einen als Gasdruckfeder arbeitenden Gasdruckraum bereitzustellen, kann vorgesehen sein, dass sich der Stababschnitt der Stator-Halteeinrichtung durch eine Querwandung des Gleitrohrs hindurch erstreckt, sodass der Stator im Innern des Gleitrohrs und radial benachbart zum Aktuator der Lineargenerators angeordnet ist. Zur Gestaltung des Gasdruckraums ist es dabei zweckmäßig, wenn die Durchführung des beweglichen Stababschnitts durch die Querwandung des Gleitrohrs gasdicht ausgebildet ist. Diese Querwandung wirkt dann als Kolbenboden, das Gleitrohr entsprechend als Kolben, welcher das Volumen des Gasdruckraums verändert.

In einer weiteren, vorteilsbehafteten Ausführungsform ist der Lineargenerator wiederum zylindrisch ausgeführt, wobei Aktuator und Stator wiederum radial beabstandet angeordnet sind. Im Unterschied zu der vorstehend beschriebenen Ausführungsform kann der radial innen liegende Teil des Generators als bewegbar zu dem radial außen liegenden Teil ausgebildet sein, d.h. der radial innen liegende Teil wird durch die Schwimmkörpereinrichtung über den Stempel bewegt. Zweckmäßigerweise umfasst die Aktuator-Trägereinrichtung hier einen Zylinder, der an seiner Mantelfläche den Aktuator trägt und der innerhalb eines zum Aktuator fest stehenden Hohlzylinders bewegbar ist, wobei der Hohlzylinder an seiner Innen- oder Außenmantelfläche den Stator trägt. Bei dieser Ausführungsform gleitet die Aktuator-Trägereinrichtung innerhalb des den Stator tragenden Hohlzylinders, wodurch ersterer linear geführt ist. Um den Innenraum des Generators abzuschließen, kann zweckmäßigerweise vorgesehen sein, dass der Hohlzylinder zumindest an der Stirnseite, welche der Schwimmereinrichtung zugewandt ist, eine Querwandung mit einer Öffnung aufweist, durch welche sich der die Aktuator-Trägereinrichtung tragende Stempel beweglich erstreckt, der auf der anderen Seite seiner Längserstreckung an der Schwimmkörpereinrichtung befestigt ist.

Grundsätzlich sind die bei dem erfindungsgemäßen Wellenenergiekraftwerk auf der Basis einer oszillierenden Wassersäule hervorgerufenen Leistungs- und Kraftdichten bei herkömmlichen Lineargeneratoren unbekannt. Es hat sich jedoch herausgestellt, dass diese, sich aus der geringen Geschwindigkeit der Wassersäule ergebenden Leistungs- und Kraftdichten insbesondere durch die Verwendung von z.B. Neodym-Permanentmagneten oder von supraleitenden Magneten in einem Lineargenerator beherrschbar sind. Ein Lineargenerator mit einer elektrischen Erregung, beispielsweise bei einem fremd erregten Synchrongenerator oder einem Generator mit supraleitenden Magneten, bietet insbesondere die Möglichkeit einer einfachen Arbeitspunktoptimierung, ohne dass die bekannten Nachteile wie die notwendige Verwendung von Schleifringen bei rotierenden Systemen auftreten. Bei elektrisch erregten Systemen kann die Arbeitspunkteinstellung durch Variation des Erregungsstromes mit einem Handelsüblichen gesteuerten Netzteil stattfinden.

Dabei kann die erfindungsgemäße Einrichtung mit permanent erregten Synchrongeneratoren verwendet werden, jedoch noch vorteilhafter mit supraleitenden Erregereinrichtungen, da diese höhere Flussdichten erlauben und gleichzeitig weniger gegenüber Korrosion empfindlich ist.

Es kann zweckmäßig sein, oberhalb der Wasseroberfläche an der Kammer des Wellenenergiekraftwerks verschließbare Luftöffnungen vorzusehen zum Einstellen und/oder Regeln der mittels des Stempels an den Lineargenerator abgegebenen Leistung. Durch Schließen der Luftöffnungen kann insbesondere in Notfallsituationen eine wirksame Leistungsbegrenzung erreicht werden, indem durch Kompression der über der Wassersäule befindlichen Luftmassen ein Dämpfungskissen aufgebaut wird.

Vorteilhaft kann bei dem erfindungsgemäßen Wellenenergiekraftwerk an der Schwimmkörpereinrichtung eine Stoss- und/oder Druckkräfte aufnehmende Puffereinrichtung angeordnet sein, welche sich beim Überschreiten einer vorgegebenen Linearbewegung der Schwimmkörpereinrichtung in der Kammer an einer inneren Kammerwandung zur Begrenzung und/oder Dämpfung der Bewegung der Schwimmkörpereinrichtung abstützt. Hierdurch kann vermieden werden, dass die Schwimmkörpereinrichtung bei extremem Energieeintrag in die Kammer wie extremem Wellengang ungedämpft an die Kammeroberwandung stößt. Der Fachmann erkennt, dass zu diesem Zweck auch vorgesehen sein kann, die Puffereinrichtung an einer inneren Kammerwandung anzuordnen, an der sich dann die Schwimmkörpereinrichtung beim Überschreiten einer vorgegebenen Linearbewegung zur Begrenzung und/oder Dämpfung der Bewegung derselben abstützt.

Die Erfindung wird im Folgenden unter Bezugnahme auf die beiliegenden Zeichnungen durch das Beschreiben verschiedener Ausführungsformen und weiterer vorteilsbehafteter Merkmale erläutert, wobei
- Figur 1: im Querschnitt ein erfindungsgemäß gestaltetes Wellenenergiekraftwerk auf der Basis einer oszillierenden Wassersäule,
- Figur 2: ein herkömmliches Wellenenergiekraftwerk auf der Basis einer oszillierenden Wassersäule,
- Figur 3a: eine Schwimmkörpereinrichtung für ein erfindungsgemäßes Wellenergiekraftwerk gemäß Figur 1 in einer Seitenansicht,
- Figur 3b: die in Figur 3a dargestellte Schwimmkörpereinrichtung in einer Aufsicht,
- Figuren 4a - 4d: einen trimmbaren Schwimmkörper, der in den Figuren 3a, b dargestellten Schwimmkörpereinrichtung in einer Draufsicht, einer Seitenansicht, einer Unteransicht sowie in zwei Querschnittansichten,
- Figur 5: den Generatorturm des in Figur 1 dargestellten erfindungsgemäßen Wellenenergiekraftwerks zusammen mit dem eingeschlossenen Lineargenerator in einer Querschnittsdarstellung,
- Figur 6: eine zweite Ausführungsform eines erfindungsgemäßen Wellenenergiekraftwerks in Querschnittsdarstellung mit einem Vorhafen,
- Figur 7: den Einbau eines erfindungsgemäßen Wellenenergiekraftwerks in einen Pfahl einer Windkraftanlage,
- Figur 8: den Einbau eines erfindungsgemäß gestalteten Wellenenergiekraftwerks in ein Fundament einer Offshore-Windkraftanlage, und
- Figur 9: Details einer weiteren Ausführungsform eines erfindungsgemäß ausgebildeten Wellenenergiekraftwerks
zeigt.

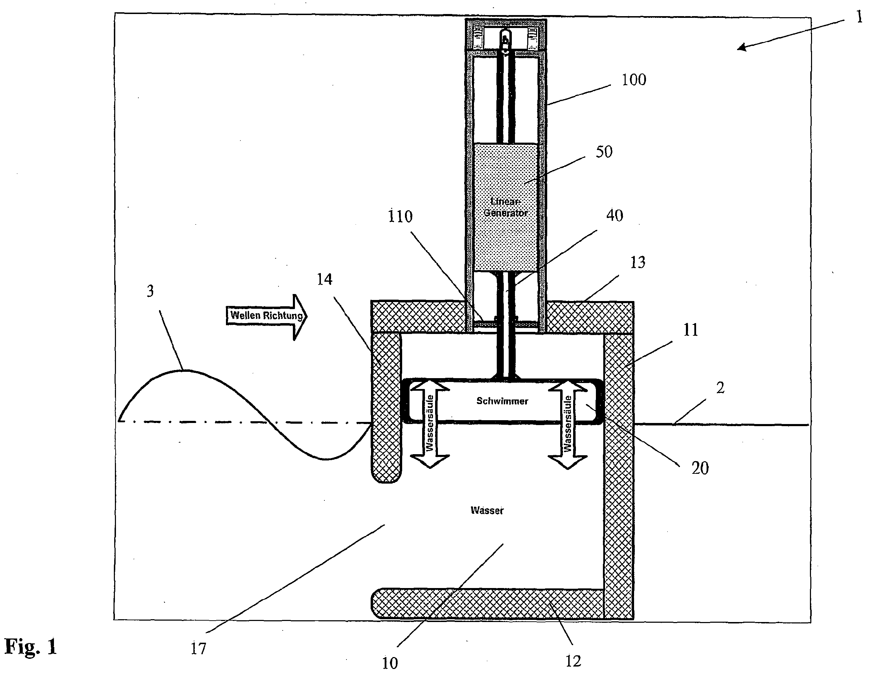

Der Aufbau eines erfindungsgemäßen Wellenenergiekraftwerks zeigt Figur 1 in einer Prinzipskizze in einer Querschnittsdarstellung. Die Kammer 10 zur Aufnahme und Zwangsführung der oszillierenden Wassersäule ist quaderförmig ausgebildet, wobei die auf dem Grund aufliegende horizontale Wandung 12, die vertikale Wandung 11, die obere Horizontalwandung 13 sowie die zu den Wellen 3 gerichtete vertikale Wandung 14 angegeben ist. Diese Wandung 14 weist unter der Wasserlinie 2 eine Öffnung 17 auf, durch welche je nach Wellenstand nach dem Prinzip der kommunizierenden Röhren Wasser in die Kammer 10 ein- bzw. ausfließt, sodass sich in der Kammer eine Wassersäule einstellt, die im Wesentlichen im Takt mit der außen anlaufenden Meereswelle 3 oszilliert. Beispielsweise wird in der in Figur 1 dargestellten Momentansituation der Meereswelle Wasser aus der Kammer über die Öffnung 17 ausfließen. Die Öffnung 15 befindet sich unter dem Wasserspiegel 2, sodass die anlaufende Welle nicht direkt in die Kammer 10 einströmen kann. Es sei darauf hingewiesen, dass bei der beschriebenen quaderförmigen Kammer sich die Öffnung allein über die senkrecht zur Zeichenebene verlaufende Wandung 14 erstreckt, alle anderen Wandungen zur Gestaltung der Kammer 10 sind geschlossen, um die beschriebene Wassersäule in der Kammer zwangszuführen.

In der Kammer ist eine Schwimmkörpereinrichtung 20 angeordnet, welche sich über die gesamte Grundfläche der Kammer erstreckt und die auf der Wassersäule in der Kammer schwimmt und von dieser mitbewegt wird. An der Schwimmkörpereinrichtung 20 ist ein Stempel 40 befestigt, welcher die Bewegung der Schwimmkörpereinrichtung 20 auf einen hier nicht dargestellten Aktuator eines Lineargenerators 50 zur Erzeugung von elektrischer Energie überträgt. Der Stempel 40 bewegt sich hierzu durch die obere Wandung 13 der Kammer 10, sodass der Lineargenerator 50 außerhalb der Kammer 10 angeordnet ist. Dabei ist der Lineargenerator 50 hermetisch in einem Generatorturm 100 gegenüber der Umgebung abgeschottet, sodass dieser geschützt angeordnet ist. Der Generatorturm 100 ist dabei an der Durchführung der oberen Wandung 13 der Kammer angebracht oder sitzt auf dieser auf. Dabei erstreckt sich der Stempel im Bereich der Durchführung durch die Wandung 13 durch eine Basisplatte 110, welche damit den Generatorraum des Turms vom Inneren der Kammer 10 trennt und damit abschottet.

In der beschriebenen Ausführungsform sind der Lineargenerator 50 und der Generatorturm zylindrisch aufgebaut.

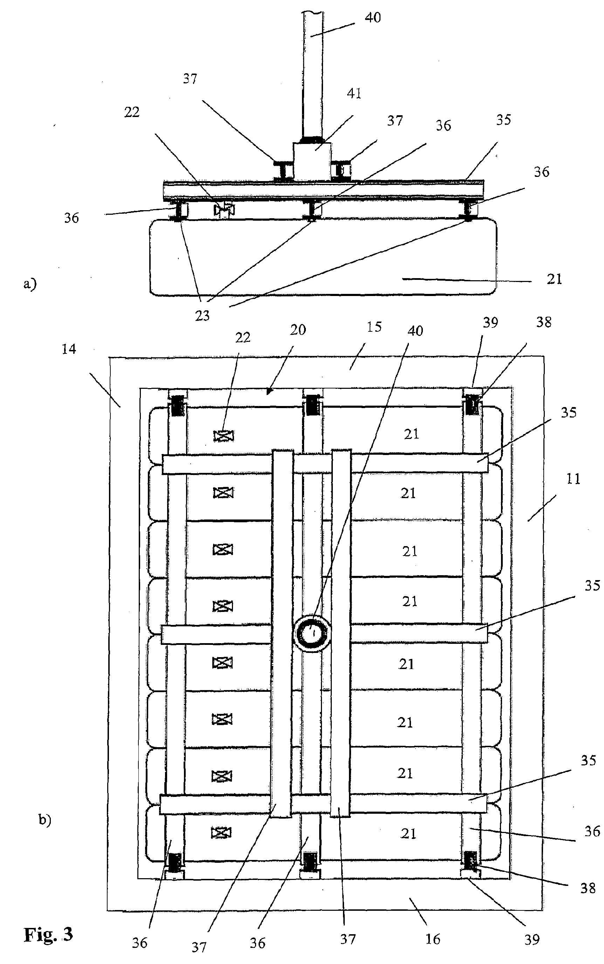

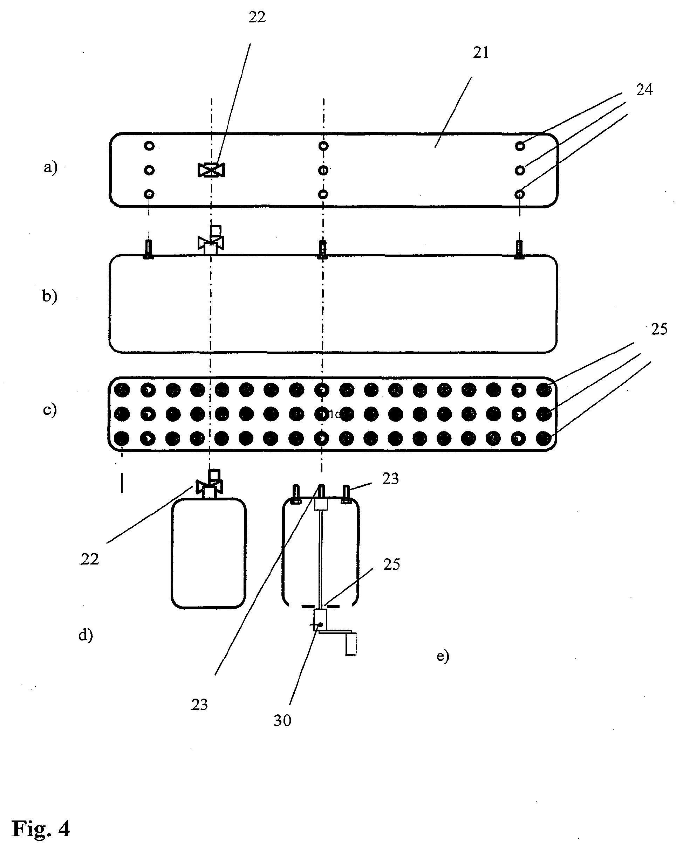

Die Figuren 3a, b zeigen einen beispielhaften Aufbau der Schwimmkörpereinrichtung 20 mit angelenktem Stempel 40 in einer Seitenansicht Fig. 3a sowie in einer Aufsicht Fig. 3b, wobei die Aufsicht auch die vertikal verlaufenden Kammerwandungen 11, 14 sowie 15, 16 im horizontalen Querschnitt zeigt. Wie aus der Figur 3b ersichtlich, umfasst die Schwimmkörpereinrichtung 20 eine Mehrzahl von hier länglichen, etwa quaderförmigen Schwimmkörpern 21, die entlang ihrer Längsseiten aneinander gereiht und an einer gemeinsamen Trägereinrichtung befestigt sind, welche sich aus einer Mehrzahl von parallel bzw. zueinander senkrecht verlaufenden und ein Traggestell bildende Stahlprofilen 35 bis 37 zusammensetzt, die in der beschriebenen Ausführungsform als Doppel-T-Träger ausgebildet sind. In der dargestellten Ausführungsform sind alle Schwimmkörper 21 gleich aufgebaut und weisen jeweils ein Trimm- oder Regelventil 22 auf, das zentral von einer Steuereinrichtung angesteuert und deren Funktion untenstehend mit Bezug auf die Figuren 4 erläutert wird.

An ihren Längsenden sind jeweils an den Stahlprofile 36 des Schwimmkörpergestells Rolleinrichtungen in Form von Walzen 38 befestigt, die bei der Auf- und Abwärtsbewegung der Schwimmkörpereinrichtung 20 in der Kammer an einer jeweiligen zugeordneten Laufschiene 39 abrollen, die an der jeweiligen Kammerwandung 15, 16 angebracht ist und sich vertikal an der Wandung erstreckt, d.h. parallel zur Bewegungsrichtung der Schwimmkörpereinrichtung 20. Dabei können die Laufschienen auch so aufgebaut sein, dass sie eine Querführung senkrecht zu ihrer Längserstreckung für die Rollen bzw. Walzen bereitstellen. Der Übersichtlichkeit halber sind nur zwei der Walzen bzw. der zugeordneten Laufschienen mit einem Bezugszeichen versehen.

In der dargestellten Ausführungsform der Schwimmkörpereinrichtung 20 weisen nur die Stahlprofile 36 jeweils an ihren Längsenden die beschriebenen Rollenführungen auf. In einer nicht beschriebenen Ausführungsform sind auch an den beiden Längsenden der senkrecht verlaufenden Stahlstreben 35 derartige Führungen sowie zugeordnete Laufschienen an den Kammerwandungen angebracht, sodass die Führung der Schwimmkörpereinrichtung in der Kammer über den gesamten Umfang realisiert ist, sodass die mechanische Belastung bei der Seitenführung der Walzen 38 minimiert sind. Letztlich werden durch die Linearführung der Schwimmkörpereinrichtung ein Verkanten des Stempels und eine bessere Führung des Aktuators im Luftspalt des Lineargenerators gewährleistet. Das Führungssystem der Schwimmkörpereinrichtung ist umgebungsbedingt sehr robust ausgeführt, beispielsweise mittels seewasserfesten Gummirollen, Edelstahl-Linearführungen an den Kammerwänden, und ist zweckmäßigerweise frei von chemischen und gering in akustischen Emissionen.

Wie aus den Figuren hervorgeht, weist die Schwimmkörpereinrichtung 20 bis auf die beschriebenen Linearführungen 38/39 keinen Kontakt zur Innenfläche der Kammerwandung auf, stattdessen ist eine Beabstandung zwischen den Seiten- bzw. Stirnflächen der einzelnen Schwimmkörper 21 zu den Kammerwandungen 11, 14 und 15, 16 von einigen Zentimeter vorgesehen.

Wie aus der Seitenansicht der Fig. 3a erkennbar, ist ein Schwimmkörper 21 über mehrere Befestigungsmittel wie beispielsweise Schrauben 23 an den Stahlprofilen 36 befestigt. Zur Aufnahme von Querkräften auf die Schwimmkörpereinrichtung ist der Stempel 40 über ein Pfannen- oder Kugelgelenk 41 mit der Schwimmkörpereinrichtung 20 verbunden. Hierdurch wird vermieden, dass die Linearführung des Aktuators im Lineargenerator aufgrund von eventuellen Querbewegungen der Schwimmkörpereinrichtung 20 belastet wird.

Der Aufbau eines einzelnen Schwimmkörpers 21 ist in Figur 4 in mehreren Ansichten, nämlich in einer Draufsicht (Fig. 4a), einer Seitenansicht (Fig. 4b), einer Unteransicht (Fig. 4c), in zwei Querschnittsdarstellungen (Fig. 4d/e) gezeigt. Wie aus der Draufsicht erkennbar, weist der Schwimmkörper 21 mehrere Befestigungsöffnungen 24 auf, durch die jeweils das Gewinde einer zugeordneten Befestigungsschraube 23 geführt werden zum Einschrauben in die Stahlprofile 36, siehe Figur 3a. In der beschriebenen Ausführungsform weist der Schwimmkörper 21 an seiner Unterseite, d.h. an der Seite, welche der Wassersäule zugewandt ist, eine Vielzahl von Flutlöcher 25 auf, über die Wasser in den als Hohlkörper ausgeführten Schwimmkörper je nach Stellung des Regelventils 22 eindringen bzw. aus dem Schwimmkörper auslaufen kann. Wie aus der Querschnittsdarstellung der Fig. 4e hervorgeht, sind jeweils Flutlöcher und Befestigungsöffnungen an gegenüber liegenden Seitenflächen des Schwimmkörpers fluchtend angeordnet, sodass ein entsprechend ausgebildetes Werkzeug 30 mit daran aufgesteckter Befestigungsschraube 23 abschnittsweise durch ein Flutloch hindurch gesteckt werden kann und auf der gegenüber liegenden Seite die Befestigungsschraube 23 sich mit ihrem Bolzen durch das Befestigungsloch 24 erstreckt. Auf diese Weise kann die Befestigungsschraube in ein zugeordnetes Gewinde im Stahlprofil 36 zur Befestigung des Schwimmkörpers 31 an dem Traggestell eingeschraubt werden.

Durch automatisierte Einrichtungen kann die hier beschriebene Vorrichtung auch dazu eingesetzt werden, um wie oben beschrieben Energie im Schwimmer zwischen zu speichern, d.h. Wasser in den Schwimmer einlassen während der Aufwärtsbewegung und kurz vor dem unteren Umkehrpunkt wieder abzulassen. Der Fachmann wird zahlreiche weitere Einrichtungen vorsehen können, die im Rahmen dieses Prinzips liegen.

In der beschriebenen Ausführungsform weist die Schwimmkörpereinrichtung 20 eine Länge von 25 m auf, die Tiefe beträgt 5 m. Die Gesamthöhe der Einrichtung beträgt 1 m. Insofern weist ein einzelner Schwimmkörper bei der in Figur 3 bzw. 4 dargestellten Ausführungsform eine Länge von 5 m auf. Die Breite der Schwimmkörper beträgt 50 cm, insofern sind die Darstellungen in den Figuren 3 und 4 nicht maßstabsgetreu.

Wie schon erläutert, setzt sich die Schwimmkörpereinrichtung 20 aus mehreren getrennten Trimmzellen zusammen, die von unten an das Aufnahme- bzw. Trägergestell montiert werden. Eine solche Trimmzelle ist in ihrer einfachsten Ausführungsform als Hohlkörper aus Kunststoff oder ähnlichem ausgebildet mit den oben beschriebenen Öffnungen. Da ein Großteil des Volumens der Trimmzelle Luft umfasst, erzeugt die Zelle beim Eintauchen in Wasser einen entsprechenden Auftrieb. Das Regelventil 22 dient zusammen mit den Flutlöchern 25 dazu, das Gewicht der jeweiligen Trimmzelle mittels Wassertrimmung an den vorherrschenden Wellengang anzupassen. Wasser kann dabei durch die Flutlöcher in die jeweilige Zelle einströmen, wenn das Regelventil geöffnet ist, sodass die Luft in der Trimmzelle entweichen kann. Um andererseits Wasser, welches sich in der Trimmzelle befindet über die Flutlöcher ausströmen zu lassen und damit den Auftrieb durch die jeweilige Trimmzelle zu erhöhen, kann über das über eine Steuereinrichtung steuerbare Regelventil 22 Druckluft zugeführt werden, die das Wasser aus der Trimmzelle herausdrängt.

In einer nicht dargestellten Ausführungsform können neben den beschriebenen Trimmzellen auch sogenannte Tankzellen umfasst sein, welche beispielsweise in ihren äußeren Abmaßen gleich zu den Trimmzellen aufgebaut sind, jedoch durch eine geschlossene Struktur eine höhere Steifigkeit und einen betriebsunabhängigen Auftrieb besitzen, da die Luft im Innern nicht durch Wasser ausgetauscht werden kann, sondern hermetisch eingeschlossen ist.

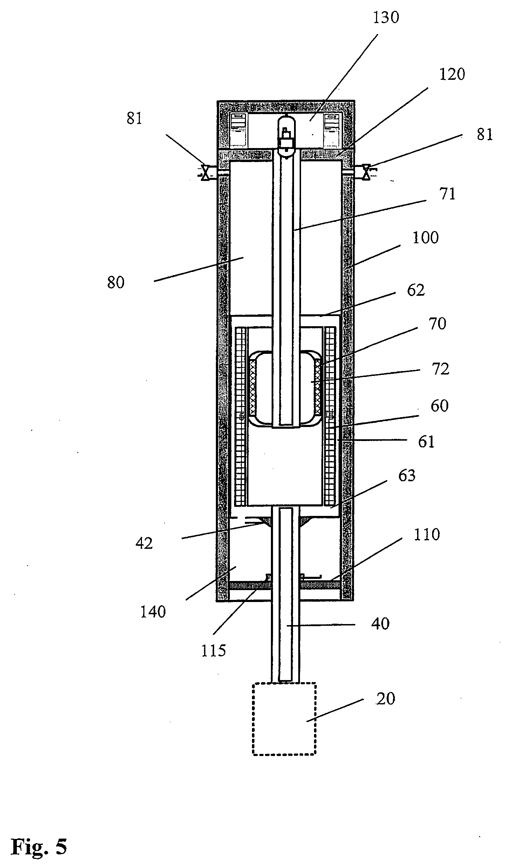

Wie schon erläutert, stellt die Schwimmkörpereinrichtung eine Kraftaufnahme für die oszillierende Wassersäule dar, wobei die lineare vertikale Bewegung der Wassersäule in der beschriebenen Ausführungsform über einen Stempel 40 auf den Aktuator des Lineargenerators übertragen wird. Sowohl die Anlenkung des Stempels an der Schwimmkörpereinrichtung als auch am Aktuator bzw. an der Trageinrichtung des Aktuators erfolgt mittels eines Pfannen- oder Kugelgelenks 41 zur Aufnahme eventuell auftretender Kräfte bzw. Momente, um die Linearführung des Lineargenerators nicht zu belasten. Als zusätzliche Lagerung des Stempels ist an einer Basisplatte 110 des Generatorturms 100 in der Durchführung für den Stempel 40 ein Lager wie ein Linearkugellager 115 vorgesehen, siehe Figur 5, welche in einer Prinzipdarstellung den auf der Kammer aufsitzenden und den Lineargenerator einschließenden Generatorturm 100 sowie den sich durch die Basisplatte 115 erstreckenden Stempel 40 mit angedeuteter Schwimmkörpereinrichtung 20 zeigt.

Bei der in Figur 5 dargestellten Ausführungsform ist der Lineargenerator zylindrisch aufgebaut, wobei der Aktuator 60 von einer als Gleitrohr 61 ausgebildeten Aktuator-Trägereinrichtung an dessen Mantelfläche getragen ist. Der Stempel 40 ist mittels eines Gelenks 42 an dem Gleitrohr 61 angelenkt, wobei das Gelenk nach dem Lösen am Gleitrohr 61 als Durchfallsicherung dient um zu vermeiden, dass der Stempel 40 unbeabsichtigt nach dem Lösen des Gelenks 42 in die Kammer 10 fällt. Andererseits bietet diese Konstruktion die Möglichkeit, bei der Installation bzw. im Servicefall nach der Flutung der Schwimmkörpereinrichtung und unter Umständen des Stempels und nach dem Entfernen der Durchfallsicherung 42 die gesamte Schwimmkörpereinrichtung einschließlich des Stempels auf den Boden der Kammer 10 zu bewegen und aus der Kammeröffnung 17 zu entnehmen bzw. im umgekehrten Fall die montierte Schwimmkörpereinrichtung einschließlich des Stempels über die Kammeröffnung 17 in die Kammer einzuführen und mit dem Lineargenerator zu verbinden.

Durch die Bewegung des Stempels 40 gleitet das Gleitrohr 61 an der Innenfläche des Generatorturms 100, wodurch die Linearführung des Aktuators des Lineargenerators bereitgestellt ist. Der zum Generatorturm 100 feststehende Stator 70 wird von einer stabförmigen Halteeinrichtung gehalten mit einem Stababschnitt 71, welcher an einem Ende eine zylinderförmige Stator-Trägereinrichtung aufweist und dessen anderes Ende mittig an einer weiteren Basisplatte 120 des Generatorturms so befestigt ist, dass sich der Stababschnitt zentrisch zum Turm erstreckt. Der Stababschnitt 71 erstreckt sich ferner durch eine Querwandung 62 des Gleitrohrs 61 hindurch, sodass der Stator 70 im Innern des Gleitrohrs 61 und radial benachbart zum Aktuator 60 angeordnet ist. Die Längserstreckung des Aktuators 60 ist dabei so eingestellt, dass im Betrieb unabhängig von der Lage der Wassersäule in der Kammer die Stator-Trägereinrichtung 72 zu keinem Zeitpunkt an die Querwandung 62 bzw. die Querwandung 63 anschlägt, über welche der Stempel 40 am Gleitrohr 61 angelenkt ist.

In der beschriebenen Ausführungsform umfasst der Stator 70 eine magnetische Erregereinrichtung in Form zumindest eines supraleitenden Magneten, wobei die Stator-Trägereinrichtung 72 als Kryostat ausgebildet ist, und wobei die Versorgungsleitungen ausgehend von dem sich auf der Basisplatte 120 befindliche Versorgungsraum 130, in welchem sich die notwendige Peripherie wie Wechselrichter, Kältesystem, Steuereinrichtung etc. befindet, über den Stababschnitt 71 geführt sind. Hierdurch ist eine hermetische Trennung der Peripherie von der Seewasserumgebung bereitgestellt.

Dementsprechend umfasst der Aktuator 60 zumindest eine Aufnahmespule, in welcher aufgrund der Relativbewegung zwischen Aktuator und Stator eine Spannung induziert wird. Ausgehend von der Aktuatorspule wird die erzeugte Energie abgeführt, beispielsweise über eine nicht dargestellte Kabelverbindung zwischen der Aktuatorspule und einem im Raum 130 angeordneten Energiespeicher. Um zu vermeiden, dass die Kabelverbindung aufgrund der Bewegung des Aktuators nicht beschädigt wird, kann eine für solche Zwecke übliche Energieführungskette vorgesehen sein.

Ferner sind auch Ausführungsformen der Erfindung ausbildbar, bei welchen die Erregereinrichtung über den Stempel bewegt und die zumindest eine Aufnahmespule ortsfest angeordnet ist.

In einer weiteren nicht dargestellten Ausführungsform eines erfindungsgemäßen Wellenenergiekraftwerks umfasst der Stator keine supraleitenden Magnetspulen als Erregereinrichtung sondern Permanentmagnete oder normal leitende Erregerspulen.

Der in Figur 5 dargestellte Lineargenerator zum Einsatz in einem erfindungsgemäßen Wellenenergiekraftwerk weist darüber hinaus einen als Gasdruckfeder arbeitenden Gasdruckraum 80 auf, dessen Volumen aufgrund der Bewegung des Gleitrohrs 61 ein veränderliches Volumen besitzt. Zur Gestaltung des Gasdruckraums gleitet das Gleitrohr 61 dichtend an der Innenfläche des Generatorturms 100. Ferner ist auch die Durchführung des Stababschnittes 71 durch die Querwandung 62 des Gleitrohrs gasdicht, sodass der Gasdruckraum 80 je nach Betriebssituation Energie speichern und abgeben kann. Darüber hinaus ist auch noch zumindest ein Gasdruckventil, vorliegend sind zwei Gasdruckregelventile vorgesehen, welche von einer zentralen Steuerung ansteuerbar sind, sodass die Gasdruckfeder bei Bedarf zugeschaltet oder auch abgeschaltet werden kann. Ist die Gasdruckfeder eingeschaltet, und werden die Gasdruckregelventile 81 zum Zeitpunkt geschlossen, bei welchem die Wassersäule einen Niedrigstand aufweist und nachfolgend die Ventile 81 geschlossen gehalten, wird bei der Aufwärtsbewegung des Aktuators 60, d.h. bei steigender Wassersäule in der Kammer 10 Energie im Gasdruckraum 80 gespeichert, welche bei abfallender Wassersäule wieder abgegeben wird.

Es sei noch darauf hingewiesen, dass der zwischen der Basisplatte 100, der Querwandung 63 und der inneren Mantelfläche des Generatorturms 100 gebildete Raum 140 in der beschriebenen Ausführungsform nicht als Gasdruckraum ausgebildet ist, beispielsweise durch das Vorsehen nicht dargestellter Öffnungen. Es ist jedoch ohne weiteres möglich, auch diesen Raum als Gasdruckraum auszubilden und für die Speicherung und Abgabe von Bewegungsenergie an das System zu nutzen.

Das erfindungsgemäße Wellenenergiekraftwerk wird von einer zentralen Steuereinrichtung gesteuert. Um zu einer Optimierung der Energieeintragung von den Meereswellen in das Kammerschwingungssystem, umfassend den Einlass, die Wassersäule, die Schwimmkörpereinrichtung, den Stempel sowie den Lineargenerator zu optimieren, ist vorgesehen, die Eigenfrequenz des Systems an die Frequenz der die Kammer anlaufenden Wellen anzupassen. Dies kann einerseits durch Trimmen der Schwimmkörper geschehen, jedoch auch durch Ansteuern des Lineargenerators zur Entnahme von Energie aus dem System, da sich hierdurch die Massenverhältnisse bzw. im zweiten Fall die Dämpfung des Systems ändert. Weiterhin kann das Volumen der Kammer geändert werden, z.B. durch eine bewegliche Bodenplatte der Kammer.

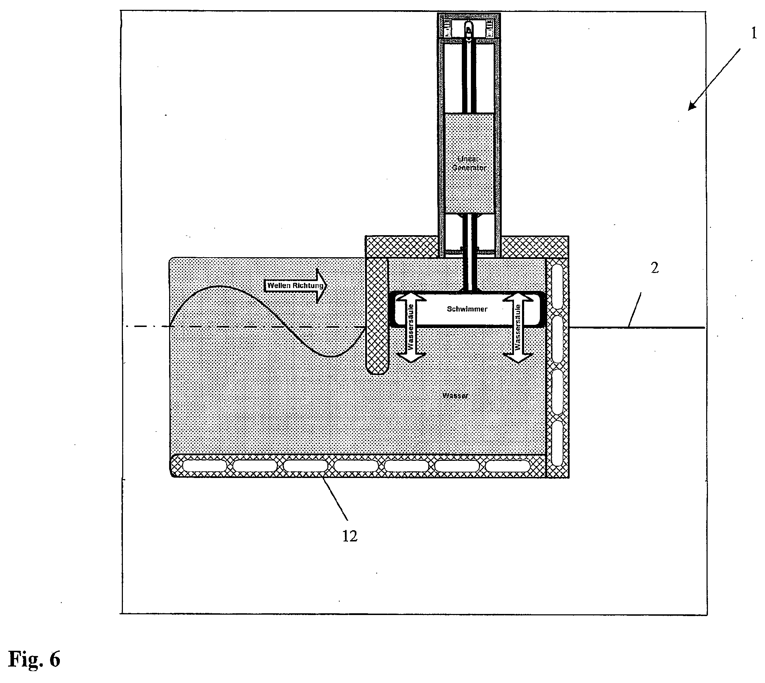

Während die in Figur 1 dargestellte Ausführungsform eines erfindungsgemäßen Wellenenergiekraftwerks im seichten Wasser auf dem Grund befestigt ist, kann die Erfindung auch als schwimmendes Kraftwerk ausgebildet sein. Eine solche Ausführungsform zeigt Figur 6, wobei ein Teil der Kammerwandungen hohl ausgebildet ist, um einen größeren Auftrieb zu erhalten, welcher letztlich dem Gewicht des gesamten Kraftwerks entsprechen muss. Eine weitere Ausführungsform sieht die Verwendung von schwimmfähigen Materialien (Faserbeton, Stahl, Kunststoffe etc.) Ferner wird bei der dargestellten Ausführung die Kammerwandung 12 in Richtung zu den einlaufenden Wellen in der Art eines Vorhafens verlängert, um eine bessere Ankopplung der Energie der Wellen an das Kraftwerk zu erreichen. Im Übrigen ist das in Figur 6 dargestellte Kraftwerk identisch mit den in Figur 1 gezeigten aufgebaut.

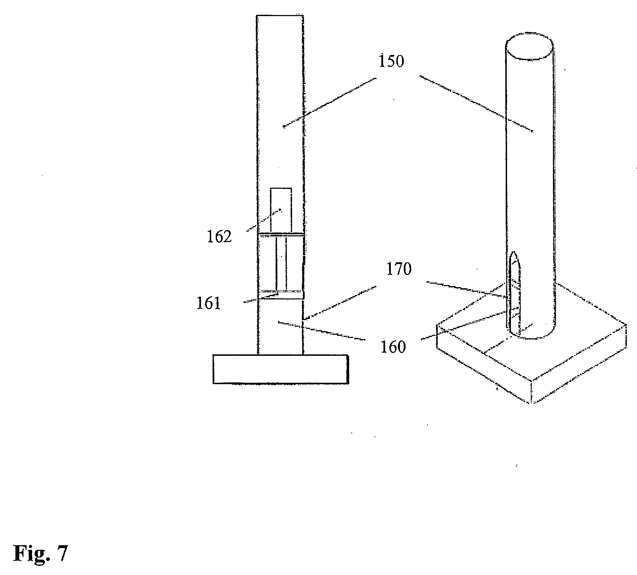

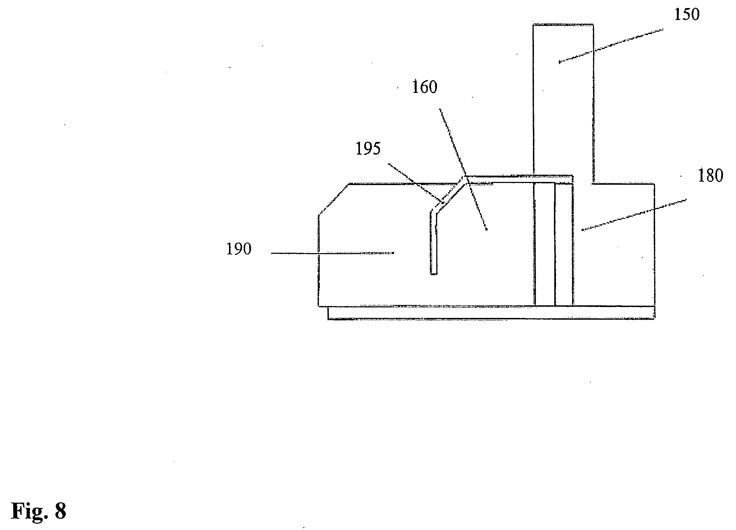

Die Figuren 7 und 8 zeigen spezielle Ausführungen der Erfindung, bei welchen das erfindungsgemäße Kraftwerk in einen Mast einer Offshore-Windkraft(WKA)-Anlage bzw. das Schwerkraftfundament einer solchen Anlage integriert ist. Figur 7 zeigt den Mast der Windkraftanlage 150, in dem die OWC-Kammer 160 integriert ist, wobei Wasser nach dem beschriebenen Prinzip durch die Öffnung 170 in die Kammer ein- bzw. ausfließen kann. Aufgrund der üblicherweise runden Gestaltung des WKA-Mastes eignet sich auch bei dieser Ausführungsform besonders ein zylinderförmig gestalteter Lineargenerator 162, welcher seine Bewegungsenergie von einem Schwimmkörpereinrichtung 161 erhält, der hier mit einer kreisförmigen Grundfläche ausgebildet ist.

Bei der in Figur 8 dargestellten Ausführungsform ist das Kraftwerk in das Fundament 180 des WKA-Mastes 150 integriert, wobei zum Schutz der Vorrichtung ein Wellenbrecher 195 und zum Anpassen der einlaufenden Welle an das Kraftwerk eine Vorhafenmauer 190 vorgesehen ist, welche einen Vorhafen bildet. Es versteht sich, dass das erfindungsgemäße Wellenergiekraftwerk auch in andere Offshore-Bauwerke wie Ölplattformen etc. integriert werden kann.

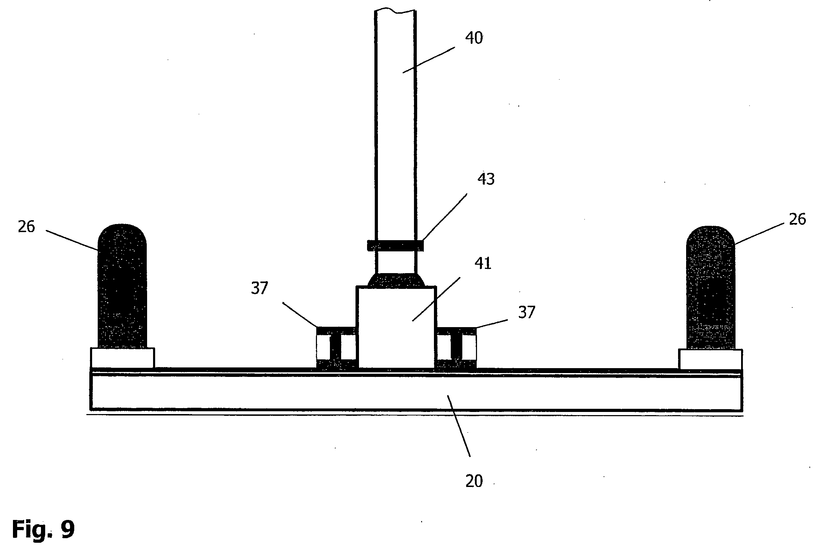

Fig. 9 zeigt Details einer weiteren Ausführungsform, welche in ihrem Grundaufbau der in Fig. 3a dargestellten entspricht. Gleiche Bauteile sind insofern mit den gleichen Bezugszeichen versehen, wobei im Folgenden nur auf die Unterschiede der Ausführungsformen eingegangen wird. Gezeigt ist die Schwimmkörpereinrichtung 20, welche über ein Pfannen- oder Kugelgelenk 41 an dem Stempel 40 angelenkt ist. Um eine Schockabsorption bereitzustellen, weist der Stempel in einem Längsabschnitt einen Gummipuffer 43 auf. Ferner sind an der Schwimmkörpereinrichtung 20 sich in Einbaulage der Schwimmkörpereinrichtung nach oben erstreckende Gummipuffer 26 vorgesehen, um zu vermeiden, dass die Schwimmkörpereinrichtung bei sehr hohem Energieeintrag in die Kammer ungeschützt gegen die obere Kammerinnenwandung stößt.

### Bezugszeichenliste

- 1: Wellenenergiekraftwerk
- 2: Meer/Wasserlinie
- 3: Welle
- 10: Kammer
- 11-16: Kammerwandung
- 17: Kammeröffnung
- 18: Durchführung
- 20: Schwimmkörpereinrichtung
- 21: Schwimmkörper
- 22: Trimm-/Regelventil
- 23: Befestigungsschraube
- 24: Befestigungsöffnung
- 25: Loch
- 26: Gummipuffer
- 30: Werkzeug
- 35-37: Stahlprofil (Doppel-T-Träger)
- 38: Rollen/Walzen
- 39: Laufschiene
- 40: Stempel
- 41: Pfannen- bzw. Kugelgelenk
- 42: Pfannen- bzw. Kugelgelenk und Durchfallsicherung
- 43: Gummipuffer
- 50: Lineargenerator
- 60: Aktuator
- 61: Gleitrohr
- 62: Querwandung
- 63: Querwandung
- 70: Stator
- 71: Stababschnitt
- 72: Stator-Trägereinrichtung/Kryostat
- 80: Gasdruckraum
- 81: Gasdruckregelventil
- 100: Generatorturm
- 110: Basisplatte
- 115: Lager
- 120: Basisplatte
- 130: Versorgungsraum
- 140: Raum
- 150: Windkraftanlage(WKA)-Mast
- 160: OWC-Kammer
- 161: Schwimmer
- 162: Lineargenerator
- 170: Öffnung
- 180: Fundament
- 190: Vorhafenmauer zur Bildung eines Vorhafens
- 195: Wellenbrecher
- 200: Wellenenergiekraftwerk (Stand der Technik)
- 205: Welle
- 210: Kammer
- 217: Kammeröffnung
- 220: Luftkammer
- 230: Luftaustritts-/eintrittsöffnung
- 240: Wells-Turbine
- 250: Generator

## Patentansprüche

1. Wellenenergiekraftwerk (1) mit einer Kammer (10, 160) zur Zwangsführung einer oszillierenden Wassersäule, wobei die unterhalb der Wasseroberfläche an sich geschlossene Kammer eine Öffnung (17, 170) aufweist durch welche Wasser in die Kammer ein- und nachfolgend wieder ausfließt, mit einem Mittel zur Entnahme von mechanischer Energie aus der oszillierenden Wassersäule und zur Umwandlung der mechanischen Energie in elektrische Energie, wobei das Mittel eine von der Wassersäule getragene Schwimmkörpereinrichtung (20, 161) sowie einen Lineargenerator (50) mit einem Stator (70) und einem Aktuator (60) umfasst, wobei die Schwimmkörpereinrichtung im Wesentlichen in mechanischer Wirkverbindung mit dem Aktuator des Lineargenerators steht und der Aktuator zur Erzeugung von elektrischer Energie durch die Bewegung der Schwimmkörpereinrichtung (20, 161) relativ zu dem Stator des Lineargenerators hin- und her bewegbar ist, wobei zwischen der Schwimmkörpereinrichtung (20, 161) und dem Aktuator (60) ein Stempel (40) angeordnet ist, welcher an einem Längsende mit einer Trägereinrichtung (61) zum Tragen des Aktuators (60) verbunden ist, **dadurch gekennzeichnet, dass** seine Steuereinrichtung vorgesehen ist zum Anpassen der Eigenfrequenz des Kammerschwingungssystems an die Frequenz der an die Kammer anlaufenden Wellen mittels Ansteuern des Lineargenerators (50) zur Entnahme von Energie, und/oder mittels Trimmen der Schwimmkörpereinrichtung (20) durch Ansteuern zumindest einer Ventileinrichtung (22), wobei ein Schwimmkörper (21) als Hohlkörper ausgebildet ist und auf einer der Wassersäule zugewandten Seite zumindest eine Öffnung (25) aufweist und die Ventileinrichtung (22) vorgesehen ist zum Auslassen und/oder Einlassen von Luft in den Hohlkörper, und/oder mittels Einstellen eines Betriebsparameters einer mit dem Stempel (40) in mechanischer Wirkverbindung stehenden Federeinrichtung (80), insbesondere einer Federkonstanten der Federeinrichtung.

2. Wellenenergiekraftwerk (1) nach Anspruch 1, **dadurch gekennzeichnet, dass** zwischen der Schwimmkörpereinrichtung (20, 161) und dem Aktuator (60) ein Stempel (40) angeordnet ist, welcher eine elastische Puffereinrichtung (43) zur Schockabsorbierung aufweist.

3. Wellenenergiekraftwerk (1) nach Anspruch 1 oder 2, **dadurch gekennzeichnet, dass** der Stempel (40) zur Aufnahme von Querkräften jeweils mittels einer Gelenkanordnung (41, 42) an der Schwimmkörper-Einrichtung (20, 161) und der Aktuator-Trägereinrichtung (61) angelenkt ist.

4. Wellenenergiekraftwerk (1) nach einem der Ansprüche 1 bis 3, **dadurch gekennzeichnet, dass** Mittel vorgesehen sind zur linearen Führung der Schwimmkörpereinrichtung an der Kammerinnenwandung, insbesondere Rollen-, walzeneinrichtungen (39) oder Gleiteinrichtungen, welche an der Schwimmkörpereinrichtung befestigt sind und die sich bei der Auf- und Abbewegung der Schwimmkörpereinrichtung (20, 161) an der Kammerinnenwand abstützen, insbesondere abrollen oder gleiten.

5. Wellenenergiekraftwerk (1) nach einem der Ansprüche 1 bis 4, **dadurch gekennzeichnet, dass** die Schwimmkörpereinrichtung (20, 161) eine Mehrzahl von Schwimmkörper (21) aufweist, welche an einer gemeinsamen Trägereinrichtung (35, 36, 37) befestigt sind.

6. Wellenenergiekraftwerk (1) nach einem der Ansprüche 1 bis 5, **dadurch gekennzeichnet, dass** der Lineargenerator (50) außerhalb der Kammer (10, 160) angeordnet ist, wobei sich der Stempel (40) durch eine obere Wandung (13) der Kammer hindurch beweglich erstreckt.

7. Wellenenergiekraftwerk (1) nach einem der Ansprüche 1 bis 6, **dadurch gekennzeichnet, dass** ein als Gasdruckfeder arbeitender Gasdruckraum (80) vorgesehen ist, wobei ein Abschnitt der den Gasdruckraum festlegenden Wandung durch eine Stirnfläche der Aktuator-Trägereinrichtung (61) bereitgestellt ist, so dass das Volumen des Gasdruckraums durch die Bewegung des Stempels (40) zur Speicherung und Abgabe von Energie veränderbar ist.

8. Wellenenergiekraftwerk (1) nach einem der Ansprüche 1 bis 7, **dadurch gekennzeichnet, dass** eine mechanische, aus ihrer Ruhelage auslenkbare Federeinrichtung vorgesehen ist, die in mechanischer Wirkverbindung mit dem Stempel steht, wobei die Auslenkung der Federeinrichtung durch die Bewegung des Stempels zur Speicherung und Abgabe von Energie veränderbar ist.

9. Wellenenergiekraftwerk (1) nach einem der Ansprüche 1 bis 8, **dadurch gekennzeichnet, dass** der Lineargenerator (50) zylindrisch aufgebaut ist und die Aktuator-Trägereinrichtung (61) ein Gleitrohr (61) umfasst, das an seiner Mantelfläche den Aktuator (60) trägt und innerhalb eines zum Aktuator feststehenden Hohlzylinders (100) bewegbar ist.

10. Wellenenergiekraftwerk (1) nach Anspruch 9, **dadurch gekennzeichnet, dass** der Stator (70) mittels einer stabförmigen Halteeinrichtung feststehend im Zylinder angeordnet ist und einen Stababschnitt (71) und einen den Stator tragenden Trägerabschnitt (72) aufweist, wobei sich die Halteeinrichtung im Wesentlichen parallel zur Hohlzylinderachse erstreckt.

11. Wellenenergiekraftwerk (1) nach Anspruch 10, **dadurch gekennzeichnet, dass** sich der Stababschnitt (71) durch eine Querwandung (62) des Gleitrohrs (61) hindurch erstreckt, sodass der Stator (70) im Innern des Gleitrohres (61) und radial benachbart zum Aktuator (60) des Lineargenerators (50) angeordnet ist.

12. Wellenenergiekraftwerk (1) nach einem der Ansprüche 1 bis 8, **dadurch gekennzeichnet, dass** der Lineargenerator zylindrisch aufgebaut ist und die Aktuator-Trägereinrichtung (61) einen Zylinder umfasst, der an seiner Mantelfläche den Aktuator (60) trägt und der innerhalb eines zum Aktuator feststehenden Hohlzylinders bewegbar ist, wobei der Hohlzylinder an seiner Mantelfläche den Stator trägt.

13. Wellenenergiekraftwerk (1) nach Anspruch 12, **dadurch gekennzeichnet, dass** der Hohlzylinder zumindest an der Stirnseite, welche der Schwimmereinrichtung zugewandt ist, eine Querwandung mit einer Öffnung aufweist, durch welche sich der die Aktuator-Trägereinrichtung (61) tragende Stempel beweglich erstreckt.

14. Wellenenergiekraftwerk (1) nach einem der Ansprüche 1 bis 13, **dadurch gekennzeichnet, dass** eine Steuereinrichtung vorgesehen ist zum Steuern der Wasseraufnahme in Schwimmkörpern (21) der Schwimmkörpereinrichtung (20).

15. Wellenenergiekraftwerk (1) nach einem der Ansprüche 1 bis 14, **dadurch gekennzeichnet, dass** der Lineargenerator (50) elektrisch erregbare Magnete aufweist.

16. Wellenenergiekraftwerk (1) nach einem der Ansprüche 1 bis 15, **dadurch gekennzeichnet, dass** der Lineargenerator (50) supraleitende Magnete aufweist.

17. Wellenenergiekraftwerk (1) nach einem der Ansprüche 1 bis 16, **dadurch gekennzeichnet, dass** oberhalb der Wasseroberfläche an der Kammer verschließbare Luftöffnungen vorgesehen sind zum Einstellen und/oder Regeln der mittels des Stempels (40) an den Lineargenerator (50) abgegebenen Leistung.

18. Wellenenergiekraftwerk (1) nach einem der Ansprüche 1 bis 17, **dadurch gekennzeichnet, dass** an der Schwimmkörpereinrichtung (20) eine Stoss- und/oder Druckkräfte aufnehmende Puffereinrichtung (26) angeordnet ist, welche sich beim Überschreiten einer vorgegebenen Linearbewegung der Schwimmkörpereinrichtung in der Kammer (10, 160) an einer inneren Kammerwandung zur Begrenzung und/oder Dämpfung der Bewegung der Schwimmkörpereinrichtung (20) abstützt.

19. Wellenenergiekraftwerk (1) nach einem der Ansprüche 1 bis 18, **dadurch gekennzeichnet, dass** an einer inneren Kammerwandung eine Stoss- und/oder Druckkräfte aufnehmende Puffereinrichtung angeordnet ist, an der sich die Schwimmkörpereinrichtung (20) beim Überschreiten einer vorgegebenen Linearbewegung zur Begrenzung und/oder Dämpfung der Bewegung derselben abstützt.

## Claims

1. Wave power plant (1), comprising a chamber (10, 160) for the forced guidance of an oscillating water column, wherein said chamber closed per se below the water surface includes an opening (17, 170) through which water flows into and subsequently again out of said chamber, a means for withdrawing mechanical energy from said oscillating water column and for converting mechanical energy into electric energy, wherein said means comprises a floating body device (20, 161) supported by said water column as well as a linear generator (50) having a stator (70) and an actuator (60), wherein said floating body device essentially is in a mechanical operative connection with the actuator of the linear generator and the actuator is movable to and fro relative to the stator of the linear generator, for the generation of electric energy through the movement of the floating body device (20, 161), wherein between said floating body device (20, 161) and said actuator (60) a plunger (40) is arranged which is connected on one longitudinal end thereof to a supporting device (61) for supporting said actuator (60), **characterized in that** there is provided a control device for adjusting the natural frequency of the chamber vibration system to the frequency of the incoming waves at the chamber by driving the linear generator (50) for the extraction of energy and/or by trimming the floating body device (20) by driving at least one valve device (22), wherein a floating body (21) is constructed as a hollow body and includes at least one opening (25) on a side facing the water column, and wherein said valve device (22) is provided for discharging air from and/or introducing air into said hollow body, and/or by adjusting an operating parameter and especially a spring rate of a spring device (80) which is in a mechanical operative connection with said plunger (40).

2. Wave power plant (1) according to claim 1, **characterized in that** between said floating body device (20, 161) and said actuator (60) a plunger (40) is arranged which comprises an elastic buffer device (43) for absorbing shocks.

3. Wave power plant (1) according to claim 1 or 2, **characterized in that** for absorbing lateral forces, said plunger (40) is respectively articulated to said floating body device (20, 151) and said actuator supporting device (61) by means of an articulated coupling (41, 42).

4. Wave power plant (1) according to one of the claims 1 to 3, **characterized in that** means for the linear guidance of the floating body device on the inner wall of the chamber are provided, in particular roll or roller devices (39) or sliding devices which are fixed to the floating body device and which bear and particularly roll or slide against the inner wall of the chamber during the up and down movement of the floating body device (20, 161).

5. Wave power plant (1) according to one of the claims 1 to 4, **characterized in that** said floating body device (20, 161) includes a plurality of floating bodies (21) that are fixed to a common supporting device (35, 36, 37).

6. Wave power plant (1) according to one of the claims 1 to 5, **characterized in that** the linear generator (50) is arranged outside of the chamber (10, 160), wherein the plunger (40) movably extends through an upper wall (13) of the chamber.

7. Wave power plant (1) according to one of the claims 1 to 6, **characterized in that** there is provided a gas pressure chamber (80) which acts as a gas pressure spring, wherein a section of a wall which defines said gas pressure chamber is provided by a front surface of the actuator supporting device (61) so that the volume of the gas pressure chamber can be changed by the movement of the plunger (40), for the storage and delivery of energy.

8. Wave power plant (1) according to one of the claims 1 to 7, **characterized in that** there is provided a mechanical spring device which is deflectable from its rest position and which is in a mechanical operative connection with the plunger, wherein the deflection of the spring device can be changed by the movement of said plunger, for the storage and delivery of energy.

9. Wave power plant (1) according to one of the claims 1 to 8, **characterized in that** the linear generator (50) has a cylindrical construction and the actuator supporting device (61) comprises a sliding tube (61) supporting the actuator (60) on its lateral surface and being movable inside a hollow cylinder (100) which is fixed with respect to said actuator.

10. Wave power plant (1) according to claim 9, **characterized in that** the stator (70) is fixedly arranged in said cylinder by means of a rod-shaped holding device and includes a rod section (71) and a supporting section (72) supporting said stator, wherein said holding device substantially extends parallel to the axis of said hollow cylinder.

11. Wave power plant (1) according to claim 10, **characterized in that** the rod section (71) extends through a transverse wall (62) of the sliding tube (61) so that the stator (70) is disposed in the interior of said sliding tube (61) and radially adjacent to the actuator (60) of the linear generator (50).

12. Wave power plant (1) according to one of the claims 1 to 8, **characterized in that** the linear generator has a cylindrical construction and the actuator supporting device (61) comprises a cylinder which carries said actuator (60) on the lateral surface thereof and which is movable inside a hollow cylinder that is fixed with respect to said actuator, wherein said hollow cylinder carries said stator on its lateral surface.

13. Wave power plant (1) according claim 12, **characterized in that** the hollow cylinder includes at least on the front face thereof facing the floating body device a transverse wall with an opening, through which opening the plunger carrying said actuator supporting means (61) extends in a movable manner.

14. Wave power plant (1) according to one of the claims 1 to 13, **characterized in that** a control means is provided for controlling the water absorption in floating bodies (21) of the floating body device (20).

15. Wave power plant (1) according to one of the claims 1 to 14, **characterized in that** the linear generator (50) includes electrically excitable magnets.

16. Wave power plant (1) according to one of the claims 1 to 15, **characterized in that** the linear generator (50) includes superconducting magnets.

17. Wave power plant (1) according to one of the claims 1 to 16, **characterized in that** closable air openings on the chamber are provided above the water surface, for adjusting and/or regulating the power output to the linear generator (50) by means of the plunger (40).

18. Wave power plant (1) according to one of the claims 1 to 17, **characterized in that** on the floating body device (20) there is arranged a shock and/or pressure load absorbing buffering device (26) which when a predetermined linear movement of the floating body device in said chamber (10, 160) is exceeded is supported against an inner wall of the chamber, for limiting and/or dampening the movement of the floating body device (20).

19. Wave power plant (1) according to one of the claims 1 to 18, **characterized in that** on an inner wall of the chamber there is arranged a shock and/or pressure load absorbing buffering device against which said floating body device (20) is supported when a predetermined linear movement is exceeded, for limiting and/or dampening the movement of the same.

## Revendications

1. Centrale houlomotrice (1), comprenant une chambre (10, 160) pour le guidage forcé d'une colonne d'eau oscillante, dans laquelle la chambre fermée en soi au-dessous de la surface de l'eau comporte un orifice (17, 170) à travers lequel de l'eau s'écoule à l'intérieur de la chambre et suivant s'écoule hors de la chambre, un moyen pour le prélèvement d'énergie mécanique de la colonne d'eau oscillante et pour convertir de l'énergie mécanique en énergie électrique, ledit moyen comprenant une installation de corps flottants (20, 161) supporté par la colonne d'eau oscillante ainsi qu'un générateur linéaire (50) avec un stator (70) et un activateur (60), ladite installation de corps flottants étant essentiellement en liaison active avec le générateur linéaire et ledit activateur étant mobile en alternance par rapport au stator pour la génération d'énergie électrique par le mouvement de l'installation de corps flottants, un plongeur (40) étant disposé entre le dispositif de corps flottants (20, 161) et l'activateur, plongeur qui est relié sur l'une de ses extrémités longitudinales à un dispositif porteur (61) pour porter ledit activateur (60), **caractérisée en ce qu'**il est prévu un dispositif de commande pour ajuster la fréquence propre du système oscillant de chambre à la fréquence des houles montantes à la chambre par la commande du générateur linéaire (50) pour le prélèvement d'énergie et/ou par l'ajustement de l'installation de corps flottants (20) par la commande d'au moins un dispositif de soupape (22), un corps flottants (20) étant réalisé en forme de corps creux et présentant au moins un orifice (25) sur un côté tourné vers la colonne d'eau, et le dispositif de soupape (22) étant prévue pour permettre l'entrée et/ou la sortie d'air dans le ou hors du corps creux, et/ou par le réglage d'un paramètre de fonctionnement et notamment d'une constante de ressort d'un dispositif de ressort (80) étant en liaison mécanique active avec le plongeur.

2. Centrale houlomotrice (1) selon la revendication 1, **caractérisée en ce qu'**entre l'installation de corps flottants (20, 161) et l'actionneur (60) est disposé un plongeur (40) qui présente un dispositif de tampon élastique (43) pour l'amortissement de chocs.

3. Centrale houlomotrice (1) selon la revendication 1 ou 2, **caractérisée en ce que**, pour la réception des forces transversales, le plongeur (40) est respectivement monté de façon pivotante à l'installation de corps flottants (20, 161) et au dispositif porteur d'actionneur (61) au moyen d'un agencement articulé (41, 42).

4. Centrale houlomotrice (1) selon l'une des revendications 1 à 3, **caractérisée en ce qu'**il sont prévus des moyens pour le guidage linéaire de l'installation de corps flottants sur la paroi intérieure de la chambre, en particulier des moyens de roulement, des moyens à rouleaux (39) ou des moyens de coulissement fixés à l'installation de corps flottants et s'appuyant et notamment roulant ou glissant sur la paroi intérieure de la chambre lors du mouvement vers le haut et vers le bas.

5. Centrale houlomotrice (1) selon l'une des revendications 1 à 4, **caractérisée en ce que** l'installation de corps flottants (20, 161) comporte une pluralité de corps flottants (21) qui sont fixés à un dispositif porteur commun (35, 36, 37).

6. Centrale houlomotrice (1) selon l'une des revendications 1 à 5, **caractérisée en ce que** le générateur linéaire (50) est disposé à l'extérieur de la chambre (10, 160), le plongeur (40) s'étendant de manière mobile à travers d'une paroi supérieure (13) de la chambre.

7. Centrale houlomotrice (1) selon l'une des revendications 1 à 6, **caractérisée en ce qu'**il est prévue une chambre de pression de gaz (80) fonctionnant comme un ressort à pression de gaz, une section de la paroi déterminant la chambre de pression de gaz étant formée par une surface frontale du dispositif porteur d'actionneur (61) de sorte que le volume de la chambre de pression de gaz est variable par le mouvement du plongeur (40), pour le stockage et la délivrance d'énergie.

8. Centrale houlomotrice (1) selon l'une des revendications 1 à 7, **caractérisée en ce qu'**il est prévu un dispositif à ressort qui peut être déplacé hors de sa position de repos et qui est en liaison mécanique active avec le plongeur, le déplacement du dispositif à ressort étant variable par le mouvement du plongeur, pour le stockage et la délivrance d'énergie.

9. Centrale houlomotrice (1) selon l'une des revendications 1 à 8, **caractérisée en ce que** le générateur linéaire (50) est construit de manière cylindrique et le dispositif porteur d'actionneur (61) comporte un tube coulissant (61) portant sur sa surface latérale ledit actionneur (60) et étant mobile à l'intérieur d'un cylindre creux (100) fixé par rapport à l'actionneur.

10. Centrale houlomotrice (1) selon la revendication 9, **caractérisée en ce que** le stator (70) est disposé dans ledit cylindre de manière fixe par un dispositif de retenue en forme de barre et comporte une section de barre (71) et une section porteuse (72) portant ledit stator, ledit dispositif de retenue s'étendant essentiellement parallèlement à l'axe de cylindre creux.

11. Centrale houlomotrice (1) selon la revendication 10, **caractérisée en ce que** la section de barre (71) s'étend à travers d'une paroi transversale (62) du tube glissant (61) de sorte que le stator (70) est disposé à l'intérieur du tube glissant (61) et radialement adjacent à l'actionneur (60) du générateur linéaire (50).

12. Centrale houlomotrice (1) selon l'une des revendications 1 à 8, **caractérisée en ce que** le générateur linéaire est construit de manière cylindrique et le dispositif porteur d'actionneur (61) comporte un cylindre portant sur sa surface latérale ledit actionneur (60) et étant mobile à l'intérieur d'un cylindre creux fixé par rapport à l'actionneur, ledit cylindre creux portant sur sa paroi latérale ledit stator.

13. Centrale houlomotrice (1) selon la revendication 12, **caractérisée en ce que** le cylindre creux comporte, au moins sur sa surface frontale tournée vers l'installation de corps flottants, une paroi transversale avec un orifice à travers lequel s'étend de manière mobile le plongeur qui porte le dispositif porteur d'actionneur (61).

14. Centrale houlomotrice (1) selon l'une des revendications 1 à 13, **caractérisée en ce qu'**il est prévu un dispositif de commande pour commander l'absorption d'eau dans des corps flottants (21) de l'installation de corps flottants (20).

15. Centrale houlomotrice (1) selon l'une des revendications 1 à 14, **caractérisée en ce que** le générateur linéaire (50) comporte des aimants qui peuvent être excités électriquement.

16. Centrale houlomotrice (1) selon l'une des revendications 1 à 15, **caractérisée en ce que** le générateur linéaire (50) comporte des aimants supraconducteurs.

17. Centrale houlomotrice (1) selon l'une des revendications 1 à 16, **caractérisée en ce qu'**au-dessus de la surface d'eau il sont prévus à la chambre des orifices d'air qui peuvent être fermés, pour ajuster et/ou régler la puissance électrique fournie au générateur linéaire (50) au moyen du plongeur (40).

18. Centrale houlomotrice (1) selon l'une des revendications 1 à 17, **caractérisée en ce que** sur l'installation de corps flottants (20) est arrangé un dispositif de tampon (26) absorbant des chocs et/ou des forces de pression, dispositif de tampon qui prend appui sur une paroi intérieure de la chambre, pour limiter et/ou amortir le mouvement de l'installation de corps flottants (20) lors du dépassement d'un mouvement linéaire prédéterminé de l'installation de corps flottants dans la chambre (10, 160).

19. Centrale houlomotrice (1) selon l'une des revendications 1 à 18, **caractérisée en ce que** sur la paroi intérieure de la chambre est arrangé un dispositif de tampon (26) absorbant des chocs et/ou des forces de pression, sur lequel prend appui l'installation de corps flottants (20) lors du dépassement d'un mouvement linéaire prédéterminé, pour limiter et/ou amortir le mouvement de celle-ci.
